**Europäisches Patentamt**

**European Patent Office**

**Office européen des brevets**

(19)

(11) Veröffentlichungsnummer : **0 461 373 B1**

(12)

# EUROPÄISCHE PATENTSCHRIFT

(45) Veröffentlichungstag der Patentschrift :
**02.02.94 Patentblatt 94/05**

(51) Int. Cl.$^5$ : **B60T 8/00**

(21) Anmeldenummer : **91106762.7**

(22) Anmeldetag : **26.04.91**

(54) **Verfahren zur Bestimmung eines optimierten Schlupfsollwertes eines Kraftfahrzeuges.**

(30) Priorität : **02.06.90 DE 4017889**

(43) Veröffentlichungstag der Anmeldung :
**18.12.91 Patentblatt 91/51**

(45) Bekanntmachung des Hinweises auf die
Patenterteilung :
**02.02.94 Patentblatt 94/05**

(84) Benannte Vertragsstaaten :
**ES FR GB IT NL SE**

(56) Entgegenhaltungen :
**EP-A- 0 229 249**
**EP-A- 0 323 051**
**DE-A- 3 833 211**

(73) Patentinhaber : **MERCEDES-BENZ AG**
**Mercedesstrasse 136**
**D-70327 Stuttgart (DE)**

(72) Erfinder : **Raiser, Hartmut**
**Fuchslöcher Strasse 3**
**W-7303 Neuhausen a. d. Fildern (DE)**

## Beschreibung

Die Erfindung betrifft ein Verfahren zur Bestimmung eines optimierten Schlupfsollwertes gemäß dem Oberbegriff des Patentanspruches 1.

Aus der (DE 36 25 945 A1) ist bereits ein gattungsgemäßes Verfahren bekannt. Bei dem Gegenstand dieser Offenlegungsschrift wird eine Momentenbilanz der angetriebenen Räder eines Kraftfahrzeuges erstellt. Der Reibungskoeffizient $\mu$ wird dabei bestimmt, indem ein Kennfeld des an die Antriebsräder gelegten Momentes über der Drehbeschleunigung der Antriebsräder für verschiedene Reibungskoeffizienten $\mu$ erstellt wird, wobei weitere Parameter berücksichtigt werden. Zu diesen Parametern gehören das Trägheitsmoment des mit den Antriebsrädern drehenden Teiles, die Last (Gewicht) und der Reifenradius.

Die erfindungsgemäßen Maßnahmen bewirken somit eine Verbesserung des gattungsgemäßen Verfahrens zur Bestimmung eines optimierten Schlupfsollwertes eines Kraftfahrzeuges sowohl in Bezug auf das Zeitverhalten als auch in Bezug auf die Genauigkeit.

Ein zum Verfahren der DE 36 25 945 A1 ähnliches Erstellen einer Momentenbilanz ist aus der DE 37 40 433 A1 bekannt, wobei dort allerdings bei der Erstellung der Momentenbilanz auf jegliche Berücksichtigung von Trägheitsmomenten verzichtet wird.

Aus der DE 38 14 956 A1 ist es bekannt, als Regelgröße für ein AntiBlockierSystem (ABS) oder eine Antriebsschlupfregelung (ASR) die Steigung $K_\mu$ der $\mu$-$\sigma$-Kurve zu verwenden. In dieser Schrift werden jedoch keinerlei Ausführungen gemacht, wie diese Steigung $K_\mu$ bestimmt werden soll.

Weiterhin ist ein Verfahren bekannt (DE 35 35 843 A1), wonach mittels eines Verfahrens der Parameteridentifikation die Kurve des Reibbeiwertes $\mu$ über dem Radschlupf $\sigma$ ($\mu$-$\sigma$-Kurve) bestimmt werden soll und wobei eine Bestimmung der Steigung erfolgt. Die Steigung $K_\mu$ wird dabei als Zeitableitung von $\mu$ bestimmt. Daraus sollen dann Schlupfsollwerte für ein AntiBlockierSystem (ABS) abgeleitet werden. Angaben, wie mittels der Zeitableitung des Reibbeiwertes $\mu$ ein stabiles Fahrverhalten eingeregelt werden soll, sind hierbei nicht offenbart.

Aufgabe der Erfindung ist es, ein Verfahren zur Bestimmung eines optimierten Schlupfsollwertes so auszubilden, daß eine möglichst einfache Anpassung dieses Schlupfsollwertes an sich verändernde Bedingungen der Fahrbahnoberfläche erfolgt.

Diese Aufgabe wird bei einem gattungsgemäßen Verfahren zur Bestimmung eines optimierten Schlupfsollwertes erfindungsgemäß mit den kennzeichnenden Merkmalen des Anspruchs 1 gelöst, wobei die Merkmale der Unteransprüche vorteilhafte Aus- und Weiterbildungen kennzeichnen.

Vorteile der Erfindung gegenüber dem bekannten Stand der Technik bestehen darin, daß Schlupfsollwerte abgeleitet werden, ohne daß der gesamte Verlauf der $\mu$-$\sigma$-Kurve bekannt sein muß.

Vorteilhaft erweist sich bei dem Gegenstand der vorliegenden Erfindung, daß nicht nur das Trägheitsmoment des mit den Antriebsrädern drehenden Teiles sondern auch das Trägheitsmoment der Räder selbst berücksichtigt wird. Ferner wird ein gegenüber dem aufgezeigten Stand der Technik verbessertes Zeitverhalten bei der Bestimmung eines optimierten Schlupfsollwertes eines Kraftfahrzeuges durch die Erfassung sowohl der Drehzahl des Schwungrades des Motors als auch der Drehzahl der Räder erreicht. Durch die gesonderte Erfassung dieser Drehzahlen können somit diese Drehzahlen gesondert in Verbindung mit den zugehörigen Trägheitsmomenten bei der Momentenbilanz berücksichtigt werden. Das verbesserte Zeitverhalten resultiert dabei aus der Tatsache, daß durch diese gesonderte Erfassung der Drehzahlen in überrachend einfacher Weise Torsionen des Antriebsstranges berücksichtigt werden können. Diese Torsionen können auch zu Schwingungen führen, wobei dann bei Verwendung eines lediglich aufgrund der Raddrehzahlen geschätzten Wertes der Drehzahl der Schwungscheibe des Motors für einen gewissen Zeitraum eine fehlerhafte Momentenbilanz ertstellt wird.

Bei einem Antriebsschlupfregelsystem (ASR) und bei einem ABS liegt das Ziel darin, den Schlupf der Räder auf einen Wert zu begrenzen, der dem Wert des Schlupfes bei maximaler Traktion entspricht. Unter Umständen wird das Ziel dahin gehend variiert, den Schlupf auf einen solchen Wert zu begrenzen, der kleiner ist als dieser Wert des Schlupfes bei maximaler Traktion, um eine bessere Seitenführung zu erhalten.

Der Gegenstand der vorliegenden Erfindung bezieht sich insbesondere darauf, dieses Maximum zu erkennen, indem die Größe und insbesondere das Vorzeichen der Steigung der $\mu$-$\sigma$-Kurve ausgewertet werden. Dies geschieht, indem eine Momentenbilanz von abgegebenem und von Fahrzeug unmittelbar "verbrauchten" Moment erstellt wird. Das abgesetzte Radmoment $M_3$ ergibt sich demnach aus dem Antriebsmoment $M_1$ abzüglich den bei einer Winkelbeschleunigung auftretenden "verbrauchten" Momenten des Motors und der Räder nach der Gleichung:

$$M_3 = M_1 - (I_{ist,Motor} * \frac{d}{dt}\Omega_{ist,Motor} - I_{ist,Räder} * \frac{d}{dt}\Omega_{ist,Räder}) * 2\pi,$$

worin I das Trägheitsmoment und $\Omega$ die Drehzahl bedeuten. Die Steigung $K_\mu$ der $\mu$-$\sigma$-Kurve ergibt sich dabei aus der Änderung dieses abgesetzten Radmomentes $M_3$ dividiert durch die Änderung des Schlupfes $\sigma$ entsprechend der Gleichung:

$$K_\mu = \delta M_3 / \delta\sigma.$$

Durch Einsetzen der obigen Gleichung ergibt sich somit:

$$K_\mu = (\delta M_1 - 2\pi * (I_{ist,Motor} * \frac{d}{dt}\Omega_{ist,Motor} - I_{ist,Räder} * \delta\frac{d}{dt}\Omega_{ist,Räder}))/\delta\sigma$$

Durch einen Übergang zu den Zeitableitungen ergibt sich daraus die Steigung $K_\mu$:

$$K_\mu = \frac{(\frac{dM_1}{dt} - 2\pi * (I_{ist,Motor} * \frac{d^2\Omega_{ist,Motor}}{d^2 t} - I_{ist,Räder} * \frac{d^2\Omega_{ist,Räder}}{d^2 t}))}{\frac{ds}{dt}}$$

Ein Ausführungsbeispiel der Erfindung ist in der Zeichnung schematisch dargestellt und wird im folgenden näher beschrieben. Es zeigen:

Fig. 1: die Verfahrensschritte zur Umrechnung der gemessenen Größen in Größen zur Weiterverarbeitung,

Fig. 2: einen ersten möglichen Ablauf des erfindungsgemäßen Verfahrens,

Fig. 3: einen zweiten möglichen Ablauf des erfindungsgemäßen Verfahrens,

Fig.4-7: eine Darstellung eines Ausfürungsbeispieles der Meßwertaufnahme und Weiterverarbeitung, wobei in den Fig. im einzelnen dargestellt ist:

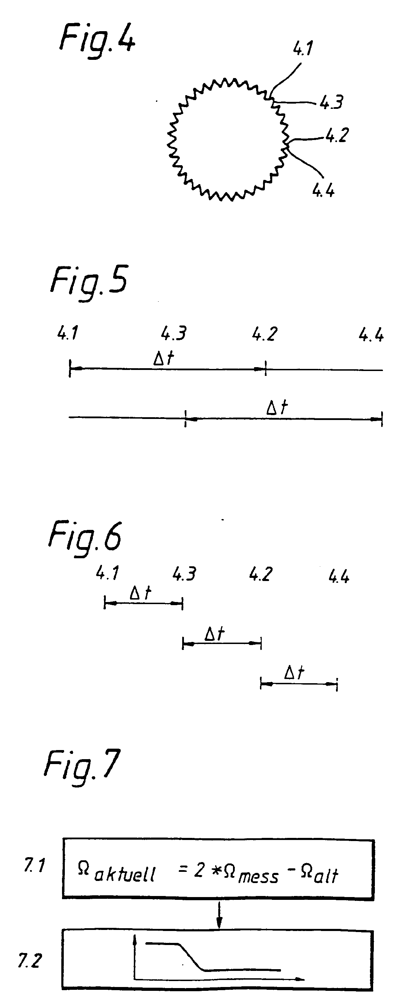

Fig. 4: ein sägezahnförmiges Impulsrad mit einer Bezeichnung der ansteigenden und abfallenden Teile der sägezahnförmigen Oberfläche,

Fig. 5: eine erste Auswertungsmöglichkeit unter Berücksichtigung sowohl ansteigender als auch abfallender Flanken des Meßsignales,

Fig. 6: eine zweite Auswertungsmöglichkeit unter Berücksichtigung sowohl ansteigender als auch abfallender Flanken des Meßsignales und

Fig. 7: ein Verfahrensablauf zur Auswertung des Meßsignales.

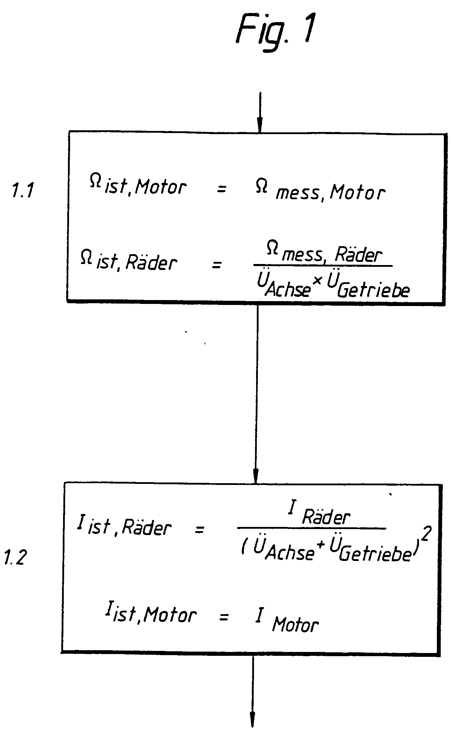

Wie aus Fig. 1 ersichtlich werden die gemessenen Größen zunächst in Istgrößen zur Weiterverarbeitung umgerechnet. Dabei werden zunächst in dem Schritt 1.1 die Drehzahlen auf einen Punkt (beispielsweise Getriebeeingang) bezogen. Es ergeben sich somit die Drehzahlen $\Omega_{ist,Motor}$ und $\Omega_{ist,Räder}$ zur Weiterverarbeitung aus den jeweiligen gemessenen Drehzahlen $\Omega_{mess,Motor}$ und $\Omega_{mess,Räder}$ durch Umrechnung unter Berücksichtigung der jeweiligen Getriebeübersetzungen. In dem in Fig. 1 dargestellten Ausführungsbeispiel werden diese Drehzahlen auf den Getriebeeingang bezogen. D.h., daß - entsprechend dem Schritt 1.1 - die Drehzahl $\Omega_{ist,Motor}$ gleich der gemessenen Drehzahl $\Omega_{mess,Motor}$ ist und daß sich die Drehzahl $\Omega_{ist,Räder}$ der Übersetzungsverhältnisse $Ü_{Achse}$ des Achsdifferentiales sowie $Ü_{Getriebe}$ des Getriebes ergibt.

Entsprechend dem Schritt 1.2 erfolgt die Bestimmung der Trägheitsmomente, wobei diese Trägheitsmomente aus denselben Punkt bezogen werden wie die Drehzahlen. Für das Trägheitsmoment $I_{ist,Räder}$ ergibt sich entsprechend dem Schritt 1.2:

$$I_{ist,Räder} = I_{Räder} / (Ü_{Achse} * Ü_{Getriebe})^2$$

und das bei der weiteren Berechnung zu verwendende Trägheitsmoment $I_{ist,Motor}$ ist gleich dem Trägheitsmoment $I_{Motor}$.

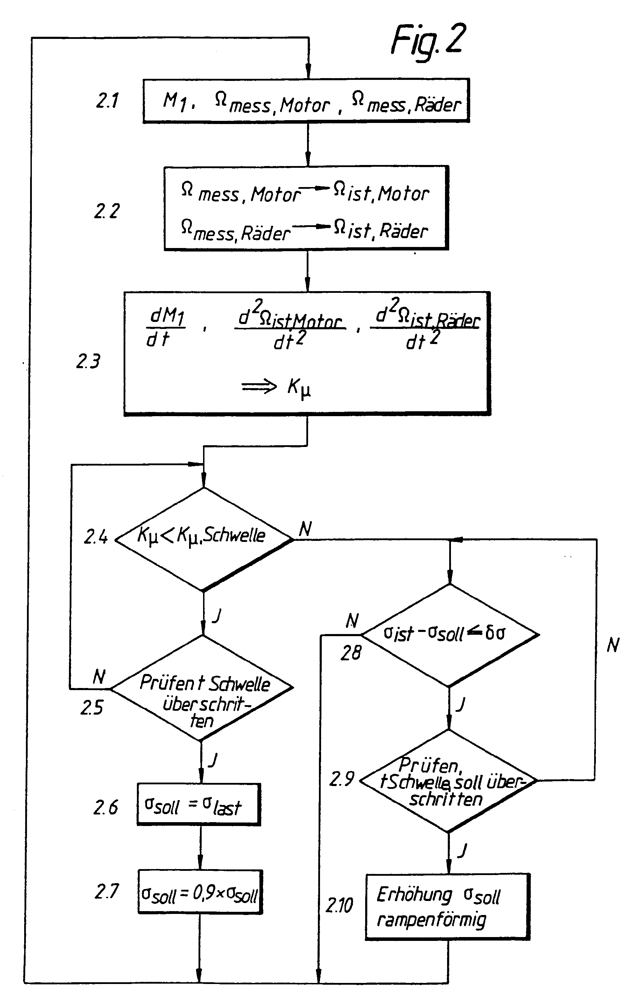

Der Fig. 2 ist ein erster möglicher Ablauf des erfindungsgemäßen Verfahrens zu entnehmen. Zunächst werden entsprechend der Darstellung in dem Schritt 2.1 die Größen Motormoment $M_1$, Drehzahl der Schwungscheibe des Motors $\Omega_{mess,Motor}$ und die Drehzahl der Räder $\Omega_{mess,Räder}$ erfaßt. Entsprechend dem in Fig. 1 dargestellten Verfahrensablauf werden dann in dem Schritt 2.2 aus den Drehzahlen $\Omega_{mess,Motor}$ und $\Omega_{mess,Räder}$ die zur Weiterverarbeitung verwendeten Drehzahlen $\Omega_{ist,Motor}$ und $\Omega_{ist,Räder}$ abgeleitet. Durch Bilden der entsprechenden Zeitableitungen wird dann in dem Schritt 2.3 die Steigung $K_\mu$ der $\mu$-$\sigma$-Kurve nach folgender Gleichung berechnet:

$$K_\mu = \frac{(\frac{dM_1}{dt} - 2\pi * (I_{ist,Motor} * \frac{d^2\Omega_{ist,Motor}}{d^2t} - I_{ist,Räder} * \frac{d^2\Omega_{ist,Räder}}{d^2t}))}{\frac{ds}{dt}}$$

Diese Steigung $K_\mu$ wird nun entsprechend dem Schritt 2.4 mit einem Schwellwert $K_{\mu,Schwelle}$ verglichen. Dieser Schwellwert $K_{\mu,Schwelle}$ kann direkt den Wert 0 annehmen und somit das Maximum der $\mu$-$\sigma$-Kurve charakterisieren. Es ist jedoch ebenso möglich, diesen Schwellwert $K_{\mu,Schwelle}$ so zu wählen, daß er einen geringen positiven Wert annimmt, d.h., daß er dann etwas links von dem Maximum der $\mu$-$\sigma$-Kurve liegt. Dadurch ist es dann auch möglich, bei $\mu$-$\sigma$-Kurven, die kein ausgeprägtes Maximum sondern nach dem Erreichen des Maximalwertes einen konstanten Verlauf mit der Steigung $K_\mu=0$ aufweisen, den Schlupf in den stabilen Bereich der $\mu$-$\sigma$-Kurve zu regeln. Weist entsprechend dem Schritt 2.4 die Steigung $K_\mu$ einen Wert auf, der geringer ist als der Schwellwert $K_{\mu,Schwelle}$, so wird entsprechend dem Schritt 2.6 der Wert $\sigma_{last}$ des Schlupfes als neuer Sollwert $\sigma_{soll}$ des Schlupfes genommen. Dieser Wert $\sigma_{last}$ des Schlupfes ist dabei der Wert des Schlupfes, bei dem die Steigung $K_{\mu}$ zuletzt einen Wert größer oder gleich dem Wert $K_{\mu,Schwelle}$ angenommen hatte. Entsprechend dem Schritt 2.5 kann noch eine Vorhaltzeit $t_{Schwelle}$ eingeführt werden. Diese Vorhaltzeit $t_{Schwelle}$ bewirkt, daß die Steigung $K_{\mu}$ zunächst für diese bestimmte Vorhaltzeit $t_{Schwelle}$ unter dem Schwellwert $K_{\mu,Schwelle}$ gelegen haben muß. Diese Vorhaltzeit $t_{Schwelle}$ kann dabei so gewählt werden, daß beispielsweise 10 Zündungszyklen abgelaufen sein müssen oder daß bei der Drehzahlerfassung 10 Ritzel erfaßt werden müssen. Dieser Sollwert $\sigma_{soll}$ kann dann entsprechend dem Schritt 2.7 noch mit dem Wert 0,9 multipliziert werden. Dadurch wird der Sollwert $\sigma_{soll}$ des Schlupfes in den stabilen Bereich der $\mu$-$\sigma$-Kurve verschoben und man erhält somit eine bessere Seitenführung. Wird bei der Überprüfung in dem Schritt 2.4 festgestellt, daß die Steigung $K_{\mu}$ größer oder gleich dem Schwellwert $K_{\mu,Schwelle}$ ist, wird entsprechend dem Schritt 2.8 geprüft, ob der Istwert $\sigma_{ist}$ des Schlupfes den Sollwert $\sigma_{soll}$ erreicht hat. Es erfolgt dann entsprechend dem Schritt 2.10 eine Erhöhung des Sollwertes $\sigma_{soll}$ des Schlupfes. Diese Erhöhung erfolgt dabei rampenförmig, wobei die Steigung dieser Rampe einen solchen Wert annimmt, daß der Istwert $\sigma_{ist}$ des Schlupfes dem Sollwert $\sigma_{soll}$ gut nachgeführt werden kann. Es kann dabei noch in dem Schritt 2.9 geprüft werden, ob die Abweichung des Istwertes $\sigma_{ist}$ des Schlupfes von dem Sollwert $\sigma_{soll}$ des Schlupfes für eine bestimmte Zeit $t_{Schwelle,soll}$ unterhalb einer vorgegebenen Differenz $\delta_{\sigma}$ liegt. Grundsätzlich muß für den Wert $\sigma_{soll}$ noch eine Initialisierung durchgeführt werden, die beispielsweise derart sein kann, daß $\sigma_{soll}$ bei Beginn einen Wert von ca. 0,2 annimmt. Durch das sägezahnförmige Verhalten des Sollwertes mit dem langsamen Hochlaufen und dem sprungartigen Zurücksetzen in den stabilen Bereich der $\mu$-$\sigma$-Kurve ist ein stabiles Fahrverhalten des Fahrzeuges weitgehend gewährleistet.

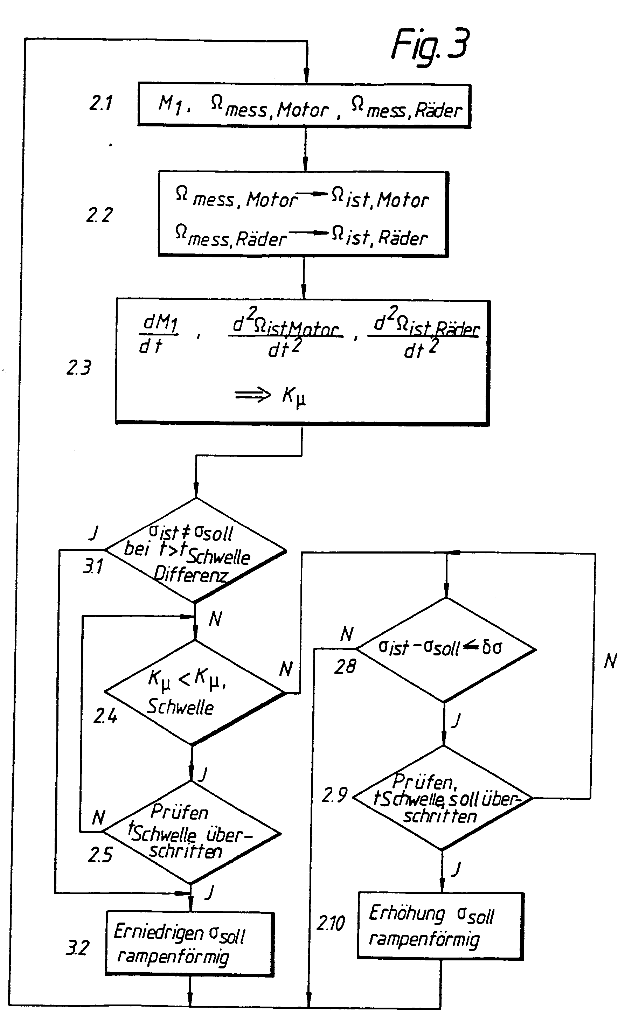

In Fig. 3 ist ein Ausführungsbeispiel des erfindungsgemäßen Verfahrens dargestellt, das mit dem in Fig. 2 dargestellten Ausführungsbeispiel übereinstimmt bis auf die dort dargestellten Schritte 2.6 und 2.7 und einen Einschub zwischen den Schritten 2.3 und 2.4. Der Einschub zwischen den Schritten 2.3 und 2.4 besteht darin, daß in dem Schritt 3.1 eine Überprüfung erfolgt, ob der Istwert $\sigma_{ist}$ des Schlupfes während einer Zeitspanne $t_{Schwelle,Differenz}$ den Sollwert $\sigma_{soll}$ des Schlupfes nicht erreicht hat. Ist dies der Fall, so kann daraus geschlossen werden, daß man sich im instabilen Gebiet der $\mu$-$\sigma$-Kurve befindet, da ein in diesem Gebiet liegender Sollwert $\sigma_{soll}$ nur sehr schwierig eingeregelt werden kann, d.h., daß man eine längere Zeit braucht, um diesen Sollwert $\sigma_{soll}$ einzuregeln. Anstelle der sprungförmigen Erniedrigung des Schwellwertes $\sigma_{soll}$ des Schlupfes in den Schritten 2.6 und 2.7 gemäß dem Ausführungsbeispiel der Fig. 2 erfolgt in dem Ausführungsbeispiel der Fig. 3 eine rampenförmige Erniedrigung entsprechend der Darstellung in dem Schritt 3.2. In einer besonders vorteilhaften Ausführungsform kann dabei der Betrag der Steigung der Rampe beim Erniedrigen des Sollwertes $\sigma_{soll}$ größer sein als beim Erhöhen des Sollwertes $\sigma_{soll}$. Dadurch wird dann die Verweildauer im instabilen Gebiet des Fahrverhaltens verkürzt.

Das erfindungsgemäße Verfahren erfordert eine Meßwertaufnahme sowie eine Weiterverarbeitung der aufgenommenen Meßwerte mit einer sehr kurzen Zeitverzögerung. Ein Ausführungsbeispiel dafür ist in den Fig. 4-7 gegeben, die im folgenden beschrieben werden sollen.

Gemäß der Darstellung der Fig. 4 weist ein sägezahnförmiges Impulsrad ansteigende Flanken 4.1 und 4.2 sowie abfallende Flanken 4.3 und 4.4 auf. Die ansteigenden Flanken 4.1 und 4.2 führen zu einem Anstieg im Verlauf des Meßsignales, die abfallenden Flanken 4.3 und 4.4 führen zu einem Abfall im Verlauf des Meßsignales.

In Fig. 5 ist eine erste Auswertungsmöglichkeit des Meßsignales dargestellt, bei der die Drehzahl ermittelt wird, indem die Zeitdauer von einer ansteigenden Flanke 4.1 zur nächsten ansteigenden Flanke 4.2 bestimmt wird. Zwischenzeitlich wird der Wert der Drehzahl wieder aktualisiert, weil zusätzlich die Zeitdauer von einer (in diesem Fall nur durch gepunktete Linien dargestellten) abfallenden Flanke zur nächsten 4.3 bestimmt wird.

Ein zweite Auswertungsmöglichkeit des Meßsignales ist in Fig. 6 dargestellt. Es wird dort ein Wert der Drehzahl bestimmt, indem die Zeitdauer von einer ansteigenden Flanke 4.1 zur nächsten abfallenden Flanke 4.3 ermittelt wird. Ein neuer Wert der Drehzahl ergibt sich dann, indem die Zeitdauer von der abfallenden Flanke 4.3 zur nächsten ansteigenden Flanke 4.2 ermittelt wird. Entsprechend wird der Wert der Drehzahl wiederum aktualisiert, indem die Zeitdauer von der ansteigenden Flanke 4.2 zur nächsten abfallenden Flanke 4.4 ermittelt wird.

Entsprechend der Darstellung der Fig. 7 kann eine Filterung des entsprechend den Fig. 5 oder 6 gewonnen Meßsignales $\Omega_{mess}$ erfolgen, indem gemäß dem Schritt 7.1 der aktuelle Wert $\Omega_{mess,aktuell}$ mit dem bisher ermittelten Wert der Drehzahl $\Omega_{alt}$ verglichen wird, um die aktuelle Drehzahl $\Omega_{aktuell}$ zu erhalten. Liegt der nächste Wert der gemessenen Drehzahl $\Omega_{mess,aktuell}$ vor, so entspricht der Wert der Drehzahl $\Omega_{alt}$ bei der erneuten Bestimmung der Drehzahl dem Wert $\Omega_{aktuell}$ bei der vorhergehenden Bestimmung der Drehzahl. Da sich somit ein zeitlich treppenförmiger Verlauf der Drehzahl ergibt, wird in einer besonders vorteilhaften Ausführungsform der Signalverlauf $\Omega_{aktuell}$ einer Tiefpaßfilterung unterzogen, die beispielsweise durch ein $PT_1$-Glied realisiert sein kann.

**Patentansprüche**

1. Verfahren zur Bestimmung eines optimierten Schlupfsollwertes ($\sigma_{soll}$) eines Kraftfahrzeuges,
   - wobei ein Motor Drehmoment auf Räder des Kraftfahrzeuges abgibt und wobei dieses Moment ($M_1$) ermittelt wird,
   - wobei die Drehzahl der Räder ($\Omega_{mess,Räder}$) bestimmt wird, auf die das Moment einwirkt,
   - daß eine Momentenbilanz erstellt wird, bei der das von dem Rad auf die Fahrbahn übertragene Moment ($M_3$) ermittelt wird aus dem von dem Motor abgegebenen Moment ($M_1$), der Drehbeschleunigung der Räder ($d\Omega/dt_{ist,Räder}$), dem Trägheitsmoment des Antriebsstranges ($I_{ist,Motor}$) sowie weiteren Größen,
   **dadurch gekennzeichnet,**
   - daß die Drehzahl ($\Omega_{ist,Motor}$) des Schwungrades des Motors des Kraftfahrzeuges ermittelt wird,
   - daß die weiteren Größen das Trägheitsmoment der Räder ($I_{ist,Räder}$) und die Drehbeschleunigung des Schwungrades ($d\Omega_{ist,Motor}$) des Motors sind,
   - wobei eine Änderung vom Reibwert ($\mu$) in einer ersten Näherung als linear angesehen wird, indem die Steigung dieses Reibwertes ($\mu$) bezüglich einer anderen Größe bestimmt wird,
   - daß die Änderung des von dem Rad auf die Fahrbahn übertragenen Momentes ($M_3$) mit einer Änderung des Schlupfes ($\sigma$) betrachtet wird,
   - daß durch den Übergang zu den entsprechenden Zeitableitungen die Änderung vom Reibwert ($\mu$) mit dem Schlupf ($\sigma$) als Steigung $K_\mu$ bestimmt wird und
   - daß aus der Steigung $K_\mu$ der Sollwert ($\sigma_{soll}$) des Schlupfes des Rades abgeleitet wird.

2. Verfahren nach Anspruch 1,
   **dadurch gekennzeichnet,**
   daß der Sollwert ($\sigma_{soll}$) des Schlupfes ($\sigma$) des Rades entsprechend dem Wert $K_\mu=0$ festgelegt wird.

3. Verfahren nach Anspruch 1,
   **dadurch gekennzeichnet,**
   daß der Sollwert ($\sigma_{soll}$) des Schlupfes ($\sigma$) des Rades entsprechend einem kleinen positiven Wert von $K_\mu$ festgelegt wird.

4. Verfahren nach Anspruch 3,
   **dadurch gekennzeichnet,**
   - daß in einem ersten Schritt der Wert des Schlupfes ($\sigma$) entsprechend dem Wert $K_\mu=0$ bestimmt wird und
   - daß daraus in einem zweiten Schritt der Sollwert ($\sigma_{soll}$) des Schlupfes abgeleitet wird, indem der in dem ersten Schritt ermittelte Wert des Schlupfes ($\sigma$) mit einem Faktor kleiner als 1 insbesondere gleich 0,9 - multipliziert wird.

5. Verfahren nach einem der Ansprüche 1 bis 4,
   **dadurch gekennzeichnet,**
   daß, nachdem der Wert des Schlupfes ($\sigma$) den Sollwert ($\sigma_{soll}$) des Schlupfes erreicht hat, eine Änderung des Sollwertes ($\sigma_{soll}$) des Schlupfes in Richtung größerer Werte erfolgt.

6. Verfahren nach Anspruch 5,
   **dadurch gekennzeichnet,**
   daß bei Unterschreiten des Wertes $K_\mu$ unter einen Schwellwert ($K_{\mu,Schwelle}$) der Sollwert ($\sigma_{soll}$) des Schlupfes ($\sigma$) auf den Wert ($\sigma_{last}$) festgelegt wird, der dem letzten Sollwert ($\sigma_{soll}$) des Schlupfes vor dem Unterschreiten des Schwellwertes ($K_{\mu,Schwelle}$) entspricht.

7. Verfahren nach Anspruch 5,
   **dadurch gekennzeichnet,**
   daß bei Unterschreiten des Wertes $K_\mu$ unter einen Schwellwert ($K_{\mu,Schwelle}$) der Sollwert ($\sigma_{soll}$) des Schlupfes rampenförmig erniedrigt wird.

**Claims**

1. A method of determining an optimised desired value of slip ($\sigma_{des.}$) of a motor vehicle,

- in which an engine delivers torque to wheels of the vehicle and in which this torque ($M_1$) is ascertained,
- in which the rotary speed of the wheels ($\Omega_{meas,wheels}$) on which the torque acts is determined,
- and in that a torque balance is established wherein the torque ($M_3$) transmitted from the wheel to the carriageway is ascertained from the torque ($M_1$) delivered by the engine, the acceleration of the wheels ($d\Omega/dt_{act,wheels}$), the moment of inertia of the drive line ($I_{act,engine}$) and further variables, characterised in that
- the rotary speed ($\Omega_{act,eng}$) of the flywheel of the engine of the vehicle is ascertained,
- and in that the further variables are the moment of inertia of the wheels ($I_{act,wheels}$) and the acceleration of the flywheel ($d\Omega_{act,eng}$) of the engine,
- in which a variation from the friction coefficient ($\mu$) is regarded as linear in a first approximation, in that the increase in this friction coefficient ($\mu$) is determined in relation to another variable,
- and in that the variation in torque ($M$) transmitted to the carriageway by the wheel is observed with a variation in slip ($\sigma$),
- and in that the variation from the coefficient of friction ($\mu$) with slip ($\sigma$) is determined as rise $K\mu$ by the changeover to the corresponding time derivatives, and
- in that the desired value ($\sigma_{des}$) of wheel slip is derived from the rise $K\mu$.

2. A method according to claim 1, characterised in that the desired value ($\sigma_{des}$) of slip ($\sigma$) of the wheel is fixed in accordance with the value $K_\mu = 0$.

3. A method according to claim 1, characterised in that the desired value ($\sigma_{des}$) of the slip ($\sigma$) of the wheel is fixed according to a small positive value of $K_\mu$.

4. A method according to claim 3, characterised in that
- in a first step the value of slip ($\sigma$) is determined according to the value $K_\mu = 0$ and
- in that from this, in a second step, the desired value ($\sigma_{des}$) of slip is derived in that the value for slip ($\sigma$) ascertained in a first step is multiplied by a factor less than 1 and in particular equal to 0.9.

5. A method according to one of claims 1 to 4, characterised in that once the value for slip ($\sigma$) has reached the desired value ($\sigma_{des}$) for slip there is a variation in the desired value ($\sigma_{des}$) for slip in the direction of higher values.

6. A method according to claim 5, characterised in that when the value $K_\mu$ falls below a threshold value ($K_{\mu,thresh}$) the desired value ($\sigma_{des}$) for slip ($\sigma$) is fixed at the value ($\sigma_{last}$) which corresponds to the last desired value ($\sigma_{des}$) of slip prior to the short fall in threshold value ($K_{\mu,thresh}$).

7. A method according to claim 5, characterised in that in the event of the value $K_\mu$ falling below a threshold value ($K_{\mu,thresh}$) the desired value ($\sigma_{des}$) for slip is reduced in ramp fashion.

**Revendications**

1. Procédé de détermination d'une valeur optimisée de consigne de patinage ($\sigma_{consigne}$) d'un véhicule,
- où un moteur fournit un couple ($M_1$) aux roues du véhicule et où ce couple ($M_1$) est déterminé,
- où la vitesse de rotation ($\Omega_{mess,roues}$) des roues, auxquelles le couple est appliqué, est déterminée,
- pour établir un bilan de couples, dans lequel le couple ($M_3$) transmis par la roue à la route est déterminé du couple ($M_1$) fourni par le moteur, de l'accélération angulaire ($d\Omega/dt_{réelle,roues}$) des roues, du moment d'inertie du train moteur ($I_{réel,moteur}$), ainsi que d'autres données, caractérisé en ce que :
- la vitesse de rotation ($\Omega_{réel,moteur}$) du volant du moteur du véhicule est déterminée,
- les autres données sont le moment d'inertie des roues ($I_{réel,roues}$) et l'accélération angulaire ($d\Omega_{réel,moteur}$) du volant du moteur,
- une variation du coefficient de frottement ($\mu$) est considérée comme linéaire dans une première approximation, du fait que la pente de ce coefficient de frottement ($\mu$) est déterminée par rapport à une autre donnée,
- la variation du couple ($M_3$) transmis par la roue à la route sera définie en relation avec une variation du patinage ($\sigma$),
- en faisant intervenir des dérivées temporelles correspondantes, la variation du coefficient de frotte-

ment ($\mu$) avec le patinage ($\sigma$) sera déterminée comme une pente $K_\mu$, et
- de la pente $K_\mu$ sera dérivée la valeur de consigne ($\sigma_{consigne}$) du patinage de la roue.

2. Procédé selon la revendication **1**, caractérisé en ce que la valeur de consigne ($\sigma_{consigne}$) du patinage de la roue sera définie en correspondance à la valeur $K_\mu = 0$.

3. Procédé selon la revendication **1**, caractérisé en ce que la valeur de consigne ($\sigma_{consigne}$) du patinage ($\sigma$) de la roue sera définie en correspondance à une petite valeur positive de $K_\mu$.

4. Procédé selon la revendication **3**, caractérisé en ce que :
- dans une première étape, la valeur du patinage ($\sigma$) sera déterminée en correspondance à la valeur $K_\mu = 0$ et
- ensuite dans une seconde étape, la valeur de consigne ($\sigma_{consigne}$) du patinage sera déterminée par multiplication de la valeur de patinage ($\sigma$) obtenue dans la première étape par un facteur inférieur à 1, notamment égal à 0,9.

5. Procédé selon l'une des revendications **1** à **4**, caractérisé en ce que, après que la valeur de patinage ($\sigma$) ait atteint la valeur de consigne ($\sigma_{consigne}$) du patinage, une variation de la valeur de consigne ($\sigma_{consigne}$) du patinage se produira dans le sens des valeurs supérieures.

6. Procédé selon la revendication **5**, caractérisé en ce que, lorsque la valeur de patinage ($\sigma$) diminue en dessous d'une valeur de seuil ($K_{\mu,seuil}$), la valeur de consigne ($\sigma_{consigne}$) du patinage ($\sigma$) prendra la valeur ($\sigma_{charge}$), qui correspond à la dernière valeur de consigne ($\sigma_{consigne}$) du patinage avant la diminution en dessous de la valeur de seuil ($K_{\mu,seuil}$).

7. Procédé selon la revendication **5**, caractérisé en ce que, lors d'une diminution de la valeur de $K_\mu$ en dessous d'une valeur de seuil ($K_{\mu,seuil}$), la valeur de consigne ($\sigma_{consigne}$) du patinage subira une réduction en forme de rampe.

# Fig. 1

1.1

$$\Omega_{ist,Motor} = \Omega_{mess,Motor}$$

$$\Omega_{ist,Räder} = \frac{\Omega_{mess,Räder}}{\ddot{U}_{Achse} \times \ddot{U}_{Getriebe}}$$

1.2

$$I_{ist,Räder} = \frac{I_{Räder}}{(\ddot{U}_{Achse} + \ddot{U}_{Getriebe})^2}$$

$$I_{ist,Motor} = I_{Motor}$$

*Fig.2*

2.1 $\boxed{M_1,\ \Omega_{mess,Motor},\ \Omega_{mess,Räder}}$

2.2 $\boxed{\begin{array}{l}\Omega_{mess,Motor}\longrightarrow\Omega_{ist,Motor}\\[4pt]\Omega_{mess,Räder}\longrightarrow\Omega_{ist,Räder}\end{array}}$

2.3 $\boxed{\dfrac{dM_1}{dt}\ ,\quad \dfrac{d^2\Omega_{istMotor}}{dt^2}\ ,\quad \dfrac{d^2\Omega_{istRäder}}{dt^2}\ \Longrightarrow K_\mu}$

2.4 $K_\mu < K_{\mu,Schwelle}$ — N

2.5 Prüfen t Schwelle überschritten — N

2.6 $\boxed{\sigma_{soll} = \sigma_{last}}$

2.7 $\boxed{\sigma_{soll} = 0{,}9 \times \sigma_{soll}}$

28 $\sigma_{ist} - \sigma_{soll} \leqslant \delta\sigma$ — N

2.9 Prüfen, tSchwelle,soll überschritten — N

2.10 $\boxed{\text{Erhöhung } \sigma_{soll} \text{ rampenförmig}}$

N

9

Fig. 3

2.1 $M_1$, $\Omega_{mess, Motor}$, $\Omega_{mess, Räder}$

2.2
$\Omega_{mess, Motor} \longrightarrow \Omega_{ist, Motor}$
$\Omega_{mess, Räder} \longrightarrow \Omega_{ist, Räder}$

2.3
$$\frac{dM_1}{dt} \quad , \quad \frac{d^2\Omega_{istMotor}}{dt^2} \quad , \quad \frac{d^2\Omega_{ist Räder}}{dt^2}$$
$$\Longrightarrow K_\mu$$

3.1 J — $\sigma_{ist} \neq \sigma_{soll}$ bei $t > t_{Schwelle}$ Differenz — N

2.4 $K_\mu < K_{\mu, Schwelle}$ — N / J

2.5 N — Prüfen $t_{Schwelle}$ überschritten — J

3.2 Erniedrigen $\sigma_{soll}$ rampenförmig

28 N — $\sigma_{ist} - \sigma_{soll} \leq \delta\sigma$ — J

2.9 Prüfen, $t_{Schwelle, soll}$ überschritten — J

2.10 Erhöhung $\sigma_{soll}$ rampenförmig

N

## Fig.4

## Fig.5

$$\Omega_{aktuell} = 2 * \Omega_{mess} - \Omega_{alt}$$

## Fig.6

## Fig.7